# EUROPÄISCHE PATENTSCHRIFT

(11) **EP 3 584 898 B1**
(45) Veröffentlichungstag und Bekanntmachung des Hinweises auf die Patenterteilung: **14.12.2022**
(21) Anmeldenummer: 19181542.2
(22) Anmeldetag: 20.06.2019
(51) Int. Cl.: H02G 3/12, H02G 3/16

(54) **INSTALLATIONSDOSE**
INSTALLATION SOCKET
BOÎTE D'INSTALLATION

(30) Priorität: 20.06.2018 DE 102018114824
(43) Veröffentlichungstag der Anmeldung: 25.12.2019
(73) Patentinhaber: Kaiser GmbH & Co. KG, 58579 Schalksmühle (DE); Agro AG, 5502 Hunzenschwil (CH)
(72) Erfinder: RITTER, Mathias, 58553 Halver (DE); SANZ-MARTIN, Javier, 58762 Altena (DE); SCHÜTZE, Andreas, 45659 Recklinghausen (DE); REICH, Sebastian, 58507 Lüdenscheid (DE); MEIER, Niklaus, 5037 Muhen (DE)
(74) Vertreter: Rentsch Partner AG

(56) Entgegenhaltungen:
- EP-A1- 0 248 181
- EP-A1- 3 150 769
- EP-A1- 3 327 884
- CH-A2- 712 235
- DE-A1- 4 332 702
- DE-A1- 19 825 115
- DE-B3-102016 121 586
- DE-U1-202018 101 204
- US-A- 4 922 056
- Kaiser Gmbh & Co. Kg: "KAISER Elektro-Installation. Dosen, Gehäuse und Systeme 2018/2019", KAISER Elektro, 1. Januar 2018 (2018-01-01), XP055580167, Gefunden im Internet: URL:https://assets.kaiser-elektro.de/media /42/4283/KAISER_EIK_2018_DE_web.pdf [gefunden am 2019-04-11]

## Beschreibung

### TECHNISCHES GEBIET

Die Erfindung betrifft eine Installationsdose für elektrische Installationen.

### HINTERGRUND DER ERFINDUNG

In Bauwerken werden für das Anbringen elektrischer Schalter, Steckdosen, Lampen, Apparate oder für Verzweigungen an den dazu vorgesehenen Stellen im Gebäude Installationsdosen verwendet, welche häufig einbetoniert werden. Unter Installationsdosen werden beispielsweise Einlasskästen, Deckendübel, Unterputzdosen, Verteilerdosen und dergleichen verstanden. Der Einbau der Installationsdose in einer Betonoberfläche (Wände, Decken, Böden) erfolgt vor dem Betonieren. Herkömmliche Installationsdosen werden beispielsweise mit Nägeln, Heisskleber oder Magneten derart an einem Schalungselement der zu giessenden Betonwand befestigt, dass eine nach vorne gerichtete Installationsöffnung der Dose der Schalung zugewandt ist und somit nach dem Vergiessen für einen Installateur zur weiteren Installation von elektrischen Geräten, wie z.B. Lampen und Schalter, etc., zugänglich ist.

Aus dem Stand der Technik sind Installationsdosen bekannt, welche typischerweise ein zylinder- oder quaderförmiges Gehäuse aufweisen, und einen über die Installationsöffnung zugänglichen Installationsraum ausbilden. Die Installationsöffnung ist in der Regel während dem Vergiessen durch einen Deckel verschlossen. In der Seitenwand weisen die Installationsdosen zudem oft umfangsseitig verteilteine Mehrzahl von Rohreinführungen auf, welche zur Befestigung von Elektrorohren, insbesondere Wellrohren und zur Durchführung von darin geführten Anschlusskabeln in den Installationsraum vorgesehen sind. Die Rohre werden in der Regel vor dem Vergiessen von Beton nach der Positionierung der Dose an dieser angebracht.

Ein Nachteil der aus dem Stand der Technik bekannten Dosen ist die zeitaufwendige Montage der Elektrorohre vor dem Vergiessen des Betons. Durch den beschränkten Zugang in den Installationsraum von der Rückseite der Installationsdose werden die entsprechenden Rohre oftmals zu tief in die Dose gesteckt, was eine nachträgliche Kürzung der Rohre nach dem Vergiessen von der Vorderseite nötig macht. Einige Dosen aus dem Stand der Technik haben deshalb zusätzlich zu der Installationsöffnung rückseitig eine Montageöffnung. Beispiele für Installationsdosen finden Sie in folgenden Dokumenten: DE102016121586B3, CH712235A2, EP0248181A1 und DE19825115A1.

Eine Aufgabe der Erfindung besteht darin eine verbesserte Installationsdose bereitzustellen, welche die Montage der Elektrorohre und nachträgliche Elektroinstallation weiter vereinfacht.

### DARSTELLUNG DER ERFINDUNG

Eine erfindungsgemässe Installationsdose für elektrotechnische Installationen umfasst einen sich in eine erste Richtung von einer Dosenvorderseite zu einer Dosenrückseite erstreckenden Grundkörper. Der Grundkörper umfasst eine röhrenförmige (sich in die erste Richtung erstreckende) Seitenwand, welche einen Installationsraum umschliesst. Die Vorderseite der Installationsdose dient zur Befestigung an einem Schalungselement der zu giessenden Betonwand, so dass der Installationsraum über eine vorderseitige Installationsöffnung nach dem Vergiessen für einen Installateur zugänglich ist. Je nach Ausführungsform kann die Seitenwand einen runden, einen polygonalen, bzw. einen rechteckigen Querschnitt aufweisen. Die röhrenförmige Seitenwand kann weiter in der ersten Richtung einen variablen Querschnitt aufweisen. Die röhrenförmige Seitenwand kann in der ersten Richtung mindestens eine Stufe aufweisen.

Zur vereinfachten Montage der Elektrorohre an der Installationsdose umfasst diese weiter eine von der röhrenförmigen Seitenwand berandete, rückseitige (von der Schalung abgewandte Seite der Installationsdose) Montageöffnung. Die röhrenförmige Seitenwand weist mindestens einen rückseitig angeordneten, entlang mindestens einer ersten definierten Kontur heraustrennbaren ersten Wandbereich auf, der bereichsweise an die Montageöffnung anschliesst. Zum Heraustrennen kann entlang der ersten Kontur mindestens ein Sollbruchelement angeordnet sein. Das mindestens eine Sollbruchelement kann beispielsweise durch eine Dünnstelle in der Seitenwand gebildet werden. Auch kann zumindest bereichsweise ein anderes Material in der Seitenwand verwendet werden um ein Sollbruchstelle zu erzeugen. Bei der Herstellung der Installationsdose durch Spritzguss kann hierzu beispielsweise ein Zwei-Komponentenverfahren verwendet werden. In einem herausgetrennten Zustand des mindestens einen ersten Wandbereiches wird so eine entlang der ersten Kontur verlaufende und an die Montageöffnung anschliessende Einführöffnung zum seitlichen Einführen eines Elektrorohres aus der ersten Richtung von hinten in den Installationsraum gebildet. Um verschiedene Rohre mit unterschiedlichen Durchmessern in die Installationsdose bzw. in die Einführöffnung einführen zu können, kann der Grundkörper mehrere, zumindest teilweise umeinander herum angeordnete erste Konturen aufweisen, welche jeweils an die Montageöffnung anschliessen.

Die Einführöffnung ist hierbei in eine erste Zone zur Aufnahme eines Rohres und eine zweite Zone zum seitlichen Einschieben des Elektrorohres aus der ersten Richtung in die erste Zone aufgeteilt. Eine Kontur der ersten Zone ist mit Vorteil derart ausgestaltet, dass diese dem äusseren Umfang des einzuführenden Rohres folgt, d.h. die Kontur der ersten Zone ist vorzugsweise rund. Die Kante der Einführöffnung der ersten Zone kann beispielsweise in ein Wellental eines gewellten Rohres eingreifen und an diesem dichtend anliegen. Gleichzeitig ist dieses Rohr so axial (senkrecht zur Seitenwand) fixiert und kann nicht mehr aus der Einführöffnung herausrutschen. Um das Elektrorohr in der Einführöffnung bzw. in der ersten Zone weiter zu fixieren ist es vorteilhaft, wenn die erste Kontur, respektive die Einführöffnung nach dem Heraustrennen des ersten Wandbereichs in der ersten Richtung mindestens einen Hinterschnitt aufweist, sodass ein in die (erste Zone der) Einführöffnung eingeschobenes Rohr hinter dem Hinterschnitt verrastet. Für eine gute Positionierung des Rohres ist der mindestens eine Hinterschnitt mit Vorteil zwischen der ersten und der zweiten Zone angeordnet. In einer Variante kann an beiden Seiten der Einführöffnung ein Hinterschnitt angeordnet sein, so dass eine Omega-förmige Einführöffnung entsteht. Die Omega-förmige Einführöffnung kann derart ausgestaltet sein, dass die zweite Zone der Einführöffnung über 130°- 170° (grad) an eine kreisförmige Kontur der ersten Zone angrenzt.

Um das Heraustrennen des mindestens einen ersten Wandbereiches zu erleichtern, kann dieser zumindest bereichsweise von mindestens einem Versteifungselement umgeben sein. Besonders der Bereich zwischen zwei direkt benachbarten ersten Wandbereichen ist vorteilhafterweise durch ein solches Versteifungselement gesondert verstärkt, so dass das Ausbrechen weiterer, benachbarter Wandbereiche der Seitenwand möglichst vermieden wird.

Für eine verbesserte Fixierung eines in die Einführöffnung eingeführten Rohres, kann alternativ oder in Ergänzung zumindest bereichsweise um die Einführöffnung herum ein Fixierungskragen angeordnet sein. Der Fixierungskragen steht hierbei mit Vorteil im Wesentlichen senkrecht von der Seitenwand ab. Der Fixierungskragen greift in einem montierten Zustand in ein (Wellen-)Tal eines montierten wellenförmigen Rohres ein. Der breitere Fixierungskragen verhindert ein Verrutschen des Rohres an der schmaler ausgestalteten Abtrennkante des heraustrennbaren Wandbereiches und ermöglicht somit eine bessere Positionierung des Rohres.

Die Installationsdose umfasst einen Deckel zum Verschliessen der rückseitigen Montageöffnung umfassen. Bei Bedarf kann der Deckel über ein Scharnierband am Grundkörper befestigt sein, z. B. indem beide Teile in derselben Spritzgiessform integral gefertigt werden. Der Deckel kann für eine verbesserte Dichtwirkung einen sich in die erste Richtung erstreckenden Kragen mit einer umlaufenden Nut aufweisen, welche sich in die erste Richtung erstreckt und in einem montierten Zustand des Deckels zumindest bereichsweise einen äusseren Rand der Seitenwand aufnimmt. Entsprechend der Erfindung muss der Deckel zum Abdichten des Rohres gegen den Deckel eine Dichtlippe umfassen. Somit ist ein durch die Einführöffnung eingeführtes Rohr dicht an der Installationsdose angebracht, so dass bei dem Giessen einer Betonwand kein Beton in die Dose eindringen kann.

Zur besseren Positionierung der Installationsdose in der zu vergiessenden Wand kann der Deckel an einer vom Installationsraum wegweisenden Aussenseite eine Vertiefung aufweisen, welche bei der Montage zur Abstützung der Dose mittels eines Abstandshalters gegenüber einem dem (ersten) Schalungselement gegenüberliegenden zweiten Schalungselement, bzw. einer zweiten Dose, genutzt werden kann. Der Abstandshalter kann röhrenförmig ausgebildet sein und bei Bedarf zum Durchführen von Kabeln verwendet werden. Weiterhin kann die Vertiefung als Rohreinführung ausgebildet sein, sodass vom Boden her Kabel eingeführt werden können. Die Rohreinführung kann in Tiefenrichtung einen Anschlag aufweisen, welcher verhindert, dass das einzuführende Rohr zu tief nach innen rutscht.

In einer bevorzugten Ausführungsform ist die Vertiefung des Deckels konusförmig ausgestaltet und weist Lamellen zur Fixierung des Abstandshalters auf. Diese Ausführungsform der Vertiefung führt zu einer besseren Fixierung des Abstandshalters und einer vereinfachten Montage der Installationsdose in der Wand. Die multiplen Lamellen erstrecken sich mit Vorteil von der abgeflachten Seitenfläche der konusförmigen Vertiefung radial nach innen. Je nach Ausgestaltung können sich die Lamellen über die gesamte Tiefe der Vertiefung (in die erste Richtung) erstrecken. Die Lamellen bilden an ihren radial innenliegenden Enden einen dazwischenliegenden Aufnahmeraum für den oben beschriebenen Abstandshalter. Die Lamellen sind vorzugsweise flexibel ausgestaltet. Je nach Ausgestaltung kann der Aufnahmeraum zylinderförmig oder vieleckig sein, jedoch sind auch andere Formen denkbar. Besonders vorteilhaft ist es, wenn der Aufnahmeraum ein Übermass gegenüber dem Abstandshalter aufweist. Beispielsweise kann ein Durchmesser des zylinderförmigen Aufnahmeraums ein Übermass gegenüber dem Durchmesser des Abstandshalters aufweisen. Auf diese Weise klemmen die flexiblen Lamellen den Abstandshalter im eingebauten Zustand ein und fixieren diesen besser.

Der Deckel kann zudem einen nach aussen (vom Installationsraum weg) gewölbten Bereich umfassen, welcher um die Vertiefung zur Aufnahme des Abstandshalters angeordnet ist. Der gewölbte Bereich ist mit Vorteil in die erste Richtung nachgiebig ausgestaltet. Ein nachgiebig ausgestalteter Bereich hat den Vorteil, dass dieser in die erste Richtung federnd sein kann, sodass auf den in die Vertiefung eingelassenen Abstandshalter zum Abstützen der Installationsdose eine Vorspannkraft aufgebracht wird. Die Vorspannkraft minimiert das Risiko des Verrutschens der Dose.

Da die Betonwanddicken variieren können, ist der Abstandshalter in der Regel auf keine konkrete Länge beschränkt und ein individuelles Ablängen desselben vordem Einbau ist oftmals nötig. Eine geeignete Länge des Abstandshalters zum Abstützen einer ersten Dose gegen eine zweite Dose bringt eine ausreichende Abstützkraft, respektive Vorspannkraft, auf die Dosen auf. D.h. mit Vorteil ist die Länge des Abstandshalters grösser als die Distanz zwischen den jeweiligen Böden der Vertiefungen für den Abstandshalter. Auf diese Weise wird der eingebaute Abstandshalter vorgespannt und die Dosen besser fixiert. Für das einfache Ablängen des Abstandshalters auf die korrekte Länge, kann die Installationsdose an ihrer Seitenwand (auf der einer von dem Installationsraum wegweisenden Seite) eine Abstandsmarkierung aufweisen. Die Abstandsmarkierung markiert einen Abstand gemessen in die erste Richtung von einem äusseren Ende des Deckels (von der Installationsöffnung weggewandtes, äusseres Ende der Dose). Der durch die Abstandsmarkierung markierte Abstand ist also mit Vorteil grösser, insbesondere 3 - 10mm länger, als die Tiefe der Vertiefung. Die Abstandsmarkierung kann beispielsweise auf dem heraustrennbaren ersten Wandbereich angeordnet sein. Jedoch sind andere Anordnungen ebenfalls denkbar.

Der Grundkörper weist in der Regel eine vorderseitige Installationsöffnung auf, welche der rückseitigen Montageöffnung gegenüberliegt. Die Installationsöffnung kann durch einen heraustrennbaren Boden verschlossen sein. Um den Boden in der verputzten und gegossenen Betonwand besser ausfindig zu machen, kann dieser ein Anzeigemittel umfassen, welches nach dem Verputzen aus dem Putz herausragt und die Position der unter dem Putz liegenden Installationsöffnung anzeigt. Weiterhin kann die Installationsöffnung an einem Sockel des Grundkörpers angeordnet sein, welcher zur Auflage an dem (ersten) Schalungselement dient. Der Sockel kann integral mit der röhrenförmigen Seitenwand verbunden oder auch als separates Element ausgebildet sein. Wenn der Sockel als separates Element ausgebildet ist, kann dieser über mindestens ein Befestigungsmittel mit der röhrenförmigen Seitenwand wirkverbunden werden. Je nach Ausgestaltung kann die röhrenförmige Seitenwand in die erste Richtung eine Stufe aufweisen. Der vorderseitige und vor der Stufe liegende Abschnitt der röhrenförmigen Seitenwand kann hierbei zumindest teilweise in den Sockel eingreifen.

In einer Variante kann am Grundkörper und/oder am Sockel mindestens ein vorderseitig, entlang einer zweiten Kontur heraustrennbarer zweiter Wandbereich angeordnet sein, der bereichsweise an die vorderseitige Installationsöffnung anschliesst. Dies hat den Vorteil, dass sich die Durchgangsöffnung bis zur Vorderseite der Dose, respektive an die Betonwandaussenseite erstreckt. Ein Installateur, welcher nach dem Vergiessen von Beton vorderseitig an der Installationsdose arbeitet, hat also von der Vorderseite vollen Zugang in die entsprechende Durchgangsöffnung. Wenn der Grundkörper einen separaten Sockel, wie oben beschrieben, umfasst, verläuft die mindestens eine zweite Kontur vorzugsweise über die röhrenförmige Seitenwand und den Sockel, so dass der zweite Wandbereich des Grundkörpers bis an die Installationsöffnung herausgetrennt werden kann. In einem herausgetrennten Zustand des zweiten Wandbereiches wird so entlang der zweiten Kontur eine Durchgangsöffnung gebildet, welche einen Durchgang von dem Installationsraum in einen Installationsraum einer daran anschliessenden, seitlich benachbarten Installationsdose ermöglicht. Je nach Bedarf kann der Grundkörper mehrere, zumindest teilweise umeinander herum angeordnete zweite Konturen aufweisen, welche jeweils an die Installationsöffnung anschliessen und beim Heraustrennen unterschiedlich grosse Durchgangsöffnungen generieren. Auf diese Weise kann die Grösse der Durchgangsöffnung je nach Bedarf erweitert werden. Zum Heraustrennen entlang der zweiten Kontur kann der Grundkörper ebenfalls mindestens ein Sollbruchelement aufweisen. Analog zu dem mindestens einen Sollbruchelement des ersten heraustrennbaren Wandbereiches kann das mindestens eine Sollbruchelement des zweiten Wandbereiches auch durch eine Dünnstelle in der Seitenwand oder eine lokale Materialschwächung gebildet werden. Da zwischen zwei heraustrennbaren zweiten Wandbereichen benachbarter Installationsdosen in der Regel kein Beton dringt aufgrund von Dichtungsmitteln (wie weiter unten genauer beschrieben), kann die Durchgangsöffnung ebenfalls nach dem Vergiessen von Beton noch vergrössert werden.

Bei Bedarf kann der mindestens eine vorderseitig angeordnete zweite heraustrennbare Wandbereich, bzw. die dazugehörige zweite Kontur, an die erste Kontur des rückseitig angeordneten ersten heraustrennbaren Wandbereiches angrenzen. Je nach Anwendung können so beide Wandbereiche herausgetrennt werden, so dass die röhrenförmige Seitenwand in erster Richtung durchgängig geöffnet ist und so maximale Flexibilität bei der Montage bietet. Mit Vorteil sind in diesem Fall der erste und zweite heraustrennbare Wandbereich in erster Richtung untereinander, d.h. umfangseitig im Wesentlichen an der gleichen Stelle angeordnet. Weiterhin ist es vorteilhaft, wenn zumindest neben den heraustrennbaren Wandbereichen, umfangsseitig an der Seitenwand mindestens ein Versteifungselement und/oder eine nach aussen vorstehende Dichtung angeordnet ist. Das Versteifungselement kann beispielsweise eine auf der Seitenwand angebrachte oder angespritzte Verstrebung oder Rippe sein. Die Dichtung kann als ein separates Element oder zum Versteifungselement zugehörig ausgeführt sein. In einem wirkverbundenen Zustand zweier benachbarter Installationsdosen liegen die jeweiligen Dichtungen der beiden Installationsdosen vorzugsweise aneinander auf und verhindern so, dass Beton in den Zwischenbereich der Seitenwände kommt, wo die jeweiligen mindestens einen ersten und zweiten Wandbereiche liegen. Umfasst der Grundkörper einen separat ausgeführten Sockel erstreckt sich die Dichtung mit Vorteil kontinuierlich von der Seitenwand in den Sockel und vice versa. Auch der Deckel kann bei Bedarf als Dichtung fungieren, bzw. einen Teil der Dichtung aufweisen. Auf diese Weise ist der gesamte Bereich der Seitenwand in erster Richtung im Bereich eines ersten und zweiten Wandbereiches in dem wirkverbundenen Zustand zweier Installationsdosen vor Beton geschützt und die Durchgangsöffnung kann, wie oben beschrieben, nachträglich einfach erweitert werden.

Für die Verbindung der Installationsdose mit einer benachbarten Installationsdose kann diese Wirkverbindungsmittel aufweisen um zwei Dosen seitlich miteinander zu verbinden. Die Wirkverbindungsmittel sind hierbei mit Vorteil in der ersten Richtung wirkverbindbar, z.B. in einander einschiebbar, so dass in einer Richtung senkrecht zu ersten Richtung zwischen den jeweiligen Wirkverbindungsmitteln der zu verbindenden Dosen ein Hinterschnitt gebildet wird. Vorzugsweise sind die Wirkverbindungsmittel am Sockel und/oder am Deckel angeordnet. Je nach Ausgestaltung der zu verbindenden Installationsdosen können die Wirkverbindungsmittel allerdings alternativ oder ergänzend ebenfalls an der Seitenwand angebracht sein. Mit Vorteil sind die Wirkverbindungsmittel jedoch jeweils in Bezug auf den Umfang seitlich neben den heraustrennbaren (ersten und ggf. zweiten) Wandbereichen angeordnet.

Je nach Anwendung kann alternativ oder in Ergänzung die Installationsdose Kupplungsmittel zum stabilen Befestigen von einem oder von mehreren flügelförmigen Halteelementen aufweisen. Im montierten Zustand stehen diese flügelförmigen Halteelemente seitlich ab und dienen zur Befestigung der Dose z.B. an einer Armierung. Mit Vorteil können diese Halteelemente über die Kupplungsmittel aus der ersten Richtung an dem Grundkörper angebracht werden. Um die gleiche Installationsdose auf einfache Weise für Anwendungen mit unterschiedlicher Betondeckung zu gebrauchen, kann das Kupplungsmittel und/oder das Halteelement derart ausgestaltet sein, dass das Halteelement in mindestens zwei Anbringpositionen gegenüber der Installationsdose befestigbar ist. Mit Vorteil ist die zweite Anbringposition des flügelförmigen Halteelementes in Bezug auf die erste Anbringposition um eine Längsachse des flügelförmigen Halteelementes um 180° (grad) gedreht. Die Längsachse des jeweiligen Halteelementes steht dabei senkrecht zur ersten Richtung der Installationsdose und ist ferner in einem montierten Zustand der Installationsdose an einer Armierung parallel zu dieser Armierung ausgerichtet. Die zwei voneinander unterschiedlichen Anbringpositionen können derart realisiert werden, dass ein Auflageabschnitt des Halteelements gegenüber dem am Halteelement vorgesehenen Teil des Kupplungsmittels aussermittig angeordnet ist, so dass das Halteelement in der ersten und der zweiten Anbringposition am Grundkörper befestigbar ist. Auf diese Weise kann die Installationsdose für zwei unterschiedliche Betondeckungen verwendet werden, da sie im eingebauten Zustand in der ersten Richtung unterschiedlich tief auf der Armierung der zu giessenden Betonwand positioniert ist.

Für eine verlässliche Anbringung der Halteelemente an der Installationsdose kann das Kupplungsmittel mindestens ein Rastelement umfassen. Mit Vorteil ist das mindestens eine Rastelement derart gestaltet, dass es sowohl in der ersten als auch in der zweiten Anbringposition verrastet. Hierfür ist es vorteilhaft, wenn zwei Rastelemente am Kupplungsmittel vorhanden sind, welche in Hinblick auf die Längsachse des Halteelements gegenüber voneinander angeordnet sind. Bei einer Drehung des Halteelementes von der ersten Anbringposition in die zweite Anbringposition befinden sich in diesem Fall die Rastelemente (in Hinblick auf das Kupplungsmittel angeordnet am Grundkörper) an der gleichen Position und eine Verrastung in beiden Anbringpositionen ist problemlos möglich. Für eine verbesserte Stabilisierung des Halteelementes an der Installationsdose kann das Kupplungsmittel angeordnet am Grundkörper eine erste rillenartige Struktur aufweisen, welche gegen eine zweite rillenartige Struktur des Kupplungsmittels angeordnet an dem Halteelement aufliegt. Mit Vorteil sind die Rillen der rillenartigen Struktur angeordnet auf dem Halteelement winklig versetzt angeordnet, insbesondere um 90° (grad), zu den Rillen auf dem Grundelement. Die in dem Kupplungsmittel angeordneten, zueinander versetzen Rillen sorgen für einen punktuellen Kontakt der jeweiligen Rippen, welche zwischen den Rillen ausgebildet werden. Die dadurch auftretende erhöhte Reibung in dem Kupplungsmittel sorgt somit für eine zusätzliche Verklemmung und einen besseren Halt des Halteelements.

Über den Umfang des Grundkörpers, bzw. über den Umfang der Seitenwand verteilt sind die Kupplungsmittel mit Vorteil um je 90 Grad versetzt zu den zweiten heraustrennbaren Wandbereichen angeordnet, wenn vorhanden. Auf diese Weise können mehrere Dosen zugleich mittels der Haltemittel beispielsweise an einer Armierung befestigt werden und mittels einer Durchgangöffnung sowie Wirkverbindungsmittel miteinander verbunden werden.

In einer weiteren Ausführungsform der Erfindung kann die Installationsdose eine Montageaufnahme zum Anbringen einer Montagehalterung für Lampen umfassen. Die Montageaufnahme ist mit Vorteil in dem Installationsraum der Installationsdose angeordnet, sodass die Montagehalterung (zumindest teilweise) in diesem angeordnet werden kann.

Eine (erste) Montageaufnahme kann beispielsweise an einer Innenseite der röhrenförmigen Seitenwand (zum Installationsraum hingewandte Seite der röhrenförmigen Seitenwand) angeordnet sein. Die Montageaufnahme der Installationsdose kann an der Innenseite mindestens einen Absatz umfassen, welcher eine Auflagefläche bildet. Mit Vorteil ist die Auflagefläche im Wesentlichen senkrecht zur ersten Richtung angeordnet, sodass in einem eingebauten Zustand der Installationsdose in einer Deckenwand die Gravitationskraft normal zur Auflagefläche ausgerichtet ist. In der Auflagefläche kann mindestens ein Anbringmittel vorhanden sein, welches zum Wirkverbinden, respektive Anbringen, der Montagehalterung dient. Das Anbringmittel kann beispielsweise eine Ausnehmung oder ein Vorsprung sein. Die Ausnehmung oder der Vorsprung erstreckt sich mit Vorteil in die erste Richtung. Alternativ kann das Anbringmittel, wie z.B. die Ausnehmung oder der Vorsprung, auch an der Seitenwand angeordnet sein. In diesem Fall kann sich die Ausnehmung oder der Vorsprung radial nach aussen und senkrecht zur ersten Richtung erstrecken. Mit Vorteil umfasst die Montageaufnahme jedoch zwei Absätze, welche in Bezug auf den Umfang der Dose gegenüber voneinander angeordnet sind und je eine Auflagefläche senkrecht zur ersten Richtung bilden. Weiterhin sind an den Auflageflächen mit Vorteil je ein Anbringmittel, insbesondere eine Ausnehmung angeordnet. So kann die Montagehalterung einfach aus der ersten Richtung in die Montageaufnahme der Installationsdose eingehängt werden.

Die Montagehalterung umfasst mit Vorteil einen Steg mit einem ersten und einem zweiten Ende. Der Steg kann im Wesentlichen U-förmig ausgestaltet sein, umfassend einen ersten und einen zweiten Schenkel und ein die beiden Schenkel verbindendes Verbindungsstück. Zwischen dem ersten und dem zweiten Ende kann ein Montagemittel, wie beispielsweise ein Haken, eine Öse oder ähnliches, angeordnet sein, an welchem die Lampe aufgehängt wird. Mit Vorteil ist das Montagemittel an dem Verbindungsstück zwischen den Schenkeln angeordnet. Das erste und das zweite Ende des Steges stehen mit Vorteil je winklig von den Schenkeln ab, so dass diese in einer montierten Position der Montagehalterung auf jeweiligen Auflageflächen der Montageaufnahme aufliegen. In der montierten Position der Montagehalterung ist vorteilhafterweise das Verbindungsstück des U-förmiges Steges in Richtung der Vorderseite der Dose, bzw. in Richtung der Installationsöffnung angeordnet. An dem ersten und dem zweiten Ende des Steges kann je nach Ausgestaltung ein Anbringmittel zum Wirkverbinden, respektive Anbringen, an der Montageaufnahme, angeordnet sein. Das Anbringmittel kann beispielsweise ein Vorsprung (oder eine Ausnehmung) sein, welcher zumindest bereichsweise in korrespondierende Ausnehmungen (oder einen Vorsprung) der Montageaufnahme eingreift und einen Formschluss bildet. Mit Vorteil ist der Vorsprung jedoch an der Montagehalterung und die Ausnehmung an der Montageaufnahme angeordnet, da ein Vorsprung im Installationsraum der Installationsdose störend bei der Montage von Kabeln o.ä. sein kann. In der montierten Position der Montagehalterung nimmt vorteilhafterweise das Montagemittel die Gewichtskraft der Lampe auf und übergibt diese über die Auflagefläche(n) an die Installationsdose und an die gegossene Betonwand.

Alternativ oder ergänzend kann der Deckel, welcher die rückseitige Montageöffnung verschliesst, an einer Deckelinnenseite eine (zweite) Montageaufnahme umfassen. Diese zweite Montageaufnahme erstreckt sich mit Vorteil in die erste Richtung der Installationsdose und dient zur Aufnahme eines einschraubbaren Montagemittels, wie beispielsweise eines Hakens, einer Öse oder ähnliches, mit einem Gewinde.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: eine erste Ausführungsform einer erfindungsgemässen Installationsdose in einer perspektivischen Ansicht von schräg vorne;
- Fig. 2: die Installationsdose gemäss Figur 1 in einer Ansicht von der Seite;
- Fig. 3: eine zweite Ausführungsform einer erfindungsgemässen Installationsdose in einer perspektivischen Ansicht und in einem auseinandergebauten Zustand;
- Fig. 4: zwei Installationsdosen gemäss der Erfindung in einem wirkverbundenen Zustand in einer perspektivischen, teilweise geschnittenen Ansicht;
- Fig. 5: zwei weitere Installationsdosen gemäss der Erfindung in einem wirkverbundenen Zustand in einer perspektivischen Ansicht;
- Fig. 6: eine weitere Ausführungsform einer Installationsdose gemäss der Erfindung in einer perspektivischen, teilweise geschnittenen Ansicht;
- Fig. 7: eine weitere Ausführungsform einer Installationsdose gemäss der Erfindung in einer perspektivischen, teilweise geschnittenen Ansicht mit Halteelementen;
- Fig. 8: eine weitere Ausführungsform einer Installationsdose gemäss der Erfindung in einer perspektivischen, teilweise geschnittenen Ansicht.

### BESCHREIBUNG DER AUSFÜHRUNGSFORMEN

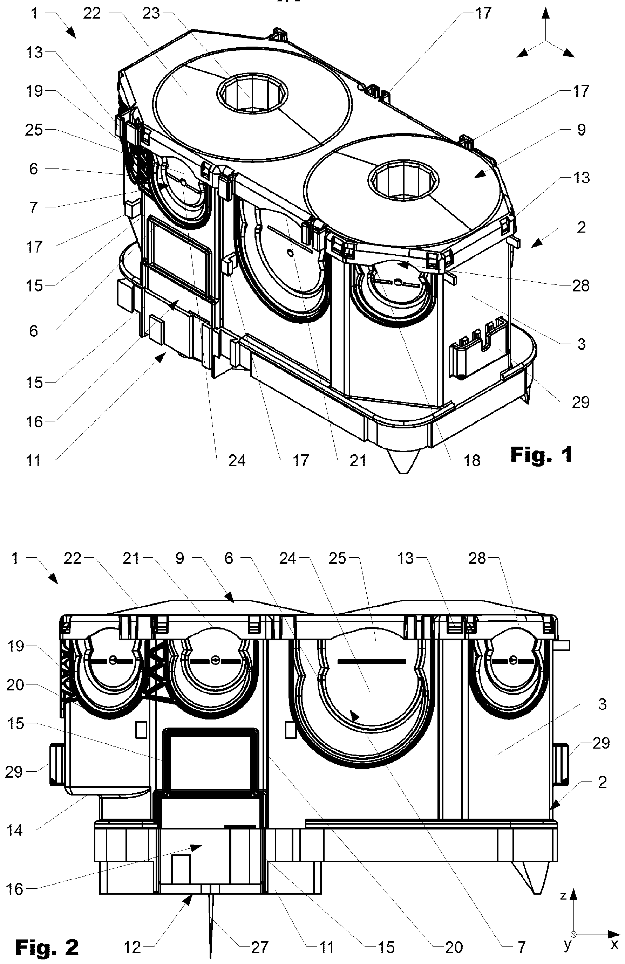

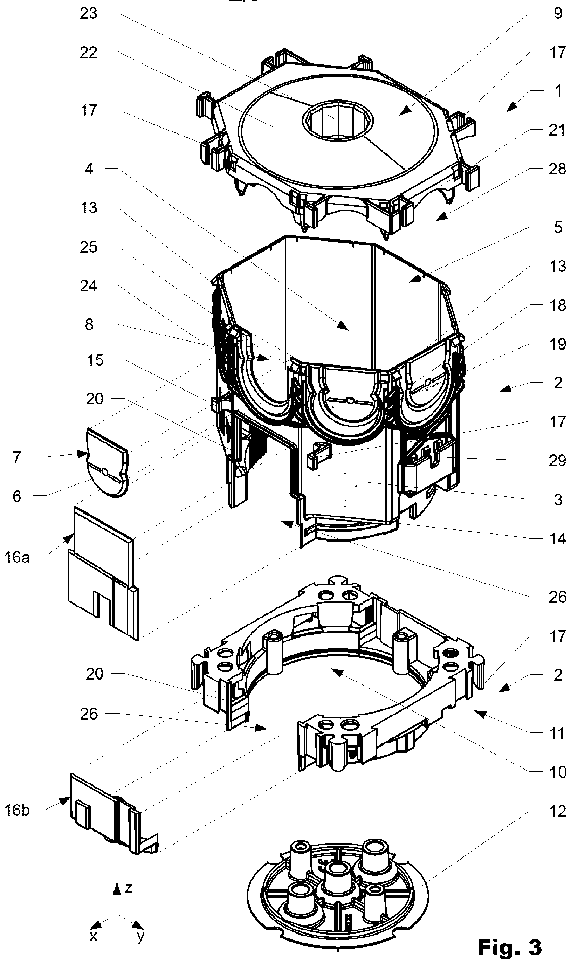

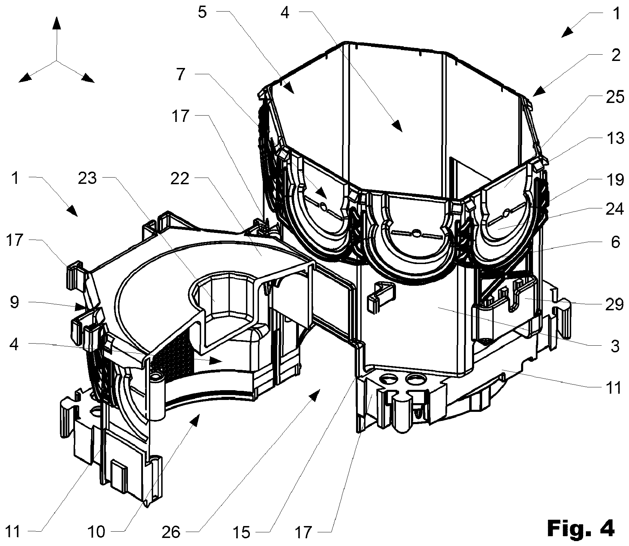

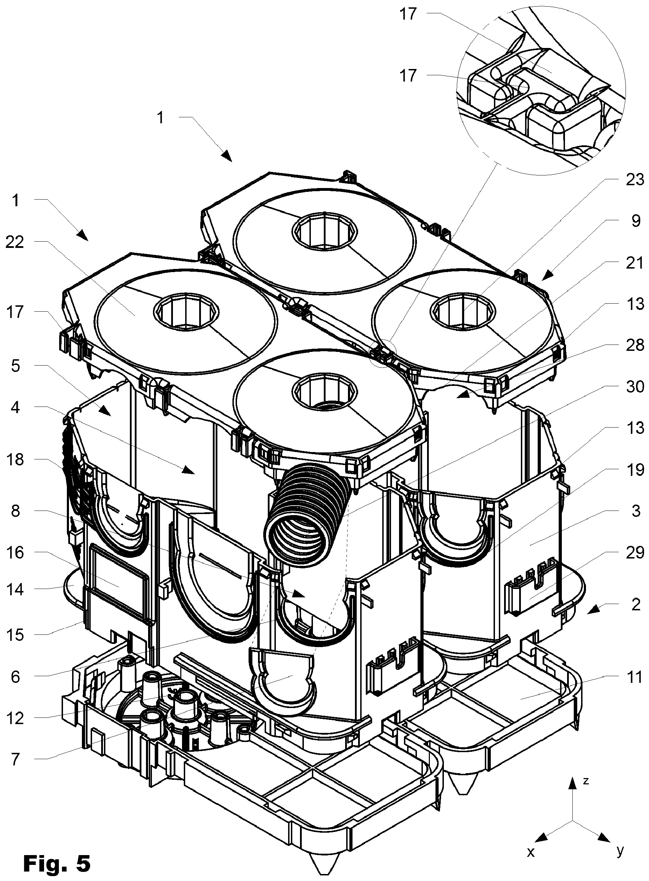

**Figur 1** zeigt eine erste Ausführungsform einer erfindungsgemässen Installationsdose 1 in einer perspektivischen Ansicht von schräg vorne und **Figur 2** die Installationsdose 1 gemäss **Figur 1** in einer Ansicht von der Seite. **Figur 3** zeigt eine zweite Ausführungsform einer Installationsdose 1 in einer perspektivischen Ansicht und in einem auseinandergebauten Zustand. **Figur 4** und **Figur 5** stellen je einen wirkverbundenen Zustand zweier Installationsdosen 1 gemäss der Erfindung in einer perspektivischen Ansicht dar.

Die erste Ausführungsform der Installationsdose1, wie in **Figur 1** und **Figur 2** dargestellt, umfasst einen Grundkörper 2 mit einer im Wesentlichen röhrenförmigen Seitenwand 3, sowie einen in der gezeigten Ausführungsvariante abnehmbaren Sockel 11. Der Sockel 11 kann hierbei ein integraler Teil des Grundkörpers 2 sein oder, wie hier gezeigt, ein separates Element, welches mit der röhrenförmigen Seitenwand 3 wirkverbunden wird. Der Grundkörper 2 weist weiter eine rückseitige Montageöffnung 5 und eine dieser gegenüberliegende, vorderseitig (hier im Sockel 11) angeordnete Installationsöffnung 10 auf.

Rückseitig in der Seitenwand 3 des Grundkörpers 2 ist weiter mindestens ein erster, entlang mindestens einer ersten definierten Kontur 6 heraustrennbarer Wandbereich 7 angeordnet. Dieser schliesst bereichsweise an die Montageöffnung 5 an, sodass er in einem herausgetrennten Zustand eine entlang der ersten Kontur 6 verlaufende, an die Montageöffnung 5 anschliessende Einführöffnung 8 zum Einführen eines Elektrorohres in der ersten Richtung (z) in den Installationsraum 4 ausbildet. Zum Heraustrennen kann entlang der ersten Kontur 6 mindestens ein Sollbruchelement angeordnet sein. Im vorliegenden Fall wird die Sollbruchstelle durch eine entlang der ersten Kontur 6 verlaufende Dünnstelle gebildet. Um verschiedene Rohre mit unterschiedlichen Durchmessern in die Installationsdose 1 bzw. in die Einführöffnung 8 einführen zu können, weist der Grundkörper 2 mehrere, zumindest teilweise umeinander herum angeordnete, Omega-förmige erste Konturen 6 auf. Diese schliessen jeweils an die Montageöffnung 5 an, sodass eine durch Herausbrechen eines entsprechenden Wandbereiches 7 entstandene Einführöffnung 8 von der Montageöffnung 5 aus zugänglich ist. Die Omega-Form der ersten Kontur 6 bildet hierbei zwei Hinterschnitte 18 in die erste Richtung, sodass ein eingeführtes Rohr in der Einführöffnung 8 verrastet.

Vorderseitig kann der Grundkörper 2 mindestens einen entlang mindestens einer zweiten Kontur 15 heraustrennbaren zweiten Wandbereich 16 aufweisen, welcher direkt oder indirekt an die Installationsöffnung 10 anschliesst. In der gezeigten Variante ist dieser derart angeordnet, dass mindestens ein heraustrennbarer zweiter Wandbereich 16 bzw. die mindestens eine zweite Kontur 15 an die erste Kontur 6 des rückseitig angeordneten ersten heraustrennbaren Wandbereiches 7 angrenzt und nur noch durch ein Versteifungselement 19 in der Form eines Steges von diesem getrennt wird. Je nach Ausgestaltung kann der Steg 19 gänzlich vermieden werden.

In der gezeigten Variante ist die Installationsöffnung 10 durch einen heraustrennbaren Boden 12 des Sockels 11 verschlossen, während die Montageöffnung 5 durch einen Deckel 9 verschlossen ist. Um den Boden 12 in der verputzen und gegossenen Betonwand besser auswindig zu machen, kann dieser ein Anzeigemittel 27 umfassen, welches nach dem Verputzen aus dem Putz herausragt und die Position der unter dem Putz liegenden Installationsöffnung 10 anzeigt. Der Deckel 9 wiederrum kann eine Vertiefung 23 aufweisen zur Aufnahme eines Abstandshalters (nicht gezeigt), welcher die Dose 1 in der ersten Richtung (z) in der zu giessenden Betonwand stützt und positioniert. Die Vertiefung 23 ist mit Vorteil von einem nach aussen gewölbten Bereich umgeben. Die Vertiefung 23 kann alternativ oder ergänzend als Rohreinführung ausgestaltet sein.

Zur Befestigung des Sockels 11 bzw. des Deckels 9 sind Befestigungsmittel 13 vorhanden. Diese können beispielsweise als lösbare oder unlösbare Rastmittel 13 ausgebildet sein, wie in der ersten Ausführungsform gezeigt. Die Rastmittel 13 umfassen in der gezeigten Variante eine Aussparung am Deckel 9 bzw. am Sockel 11, welche bei der Montage in erster Richtung einen Hinterschnitt mit einem Rastelement angeordnet am Grundkörper 2 bildet (oder vice versa). Andere Ausgestaltungen sind möglich.

Die zweite Ausführungsform der Installationsdose 1, wie in **Figur 3** dargestellt, unterscheidet sich von der ersten Ausführungsform lediglich in der Ausgestaltung und Form der Dose 1. In der gezeigten Darstellung ist die Installationsdose 1 jedoch in einem auseinandergebauten Zustand mit herausgetrennten ersten und zweiten Wandbereichen 7, 16a, 16b sowie geöffneter Installationsöffnung 10, beziehungsweise herausgetrennten Boden 12, dargestellt. Es ist ersichtlich, dass sich die von dem vorderseitig zweiten heraustrennbaren Wandbereich 16a, 16b gebildete Durchgangsöffnung 26 durch die röhrenförmige Seitenwand 3 als auch durch den Sockel 11 des Grundkörpers 2 erstreckt. Bei einer separaten und vom Grundkörper losgelösten Ausgestaltung des Sockels, entstehen somit beim Heraustrennen je ein zweiter Wandbereich 16a, 16b. Weiterhin sind die die Durchgangsöffnung 26 zumindest teilweise umgebenden Versteifungselemente 19 in der Form von Rippen ersichtlich. In dem vorliegenden Fall dienen diese Rippen zudem als Dichtung 20 der Durchgangsöffnung 26 gegen eine zweite Installationsdose mit der diese Dose 1 verbunden werden kann. An dem geöffneten Deckel 9 ist erkennbar, dass dieser über um den Umfang verteilte Ausschnitte 28 aufweist, welche zu den jeweiligen ersten Wandbereichen 7 korrespondieren. Die Ausschnitte 28 haben eine sichelartige Form, sodass der Ausschnitt 28 der Kontur eines einzuführenden Elektrorohres folgt. Weiterhin kann der Deckel 9 in dem Ausschnitt 28 über eine Dichtlippe 21 verfügen um ein optimales Abdichten eines Elektrorohres in die Einführöffnung 8 zu unterstützen. Ebenfalls kann der Deckel 9 wie gezeigt einen sich in die erste Richtung (z) erstreckenden Kragen mit einer umlaufenden Nut aufweisen, welche sich in die erste Richtung (z) erstreckt und in einem montierten Zustand des Deckels 9 zumindest bereichsweise einen äusseren rückseitigen Rand der Seitenwand 3 aufnimmt.

Wie ebenfalls bei der ersten Ausführungsform (vgl. **Figur 1** und **Figur 2**), weist die Installationsdose der zweiten Ausführungsform Kupplungsmittel 29 zum stabilen Befestigen von einem oder von mehreren Halteelementen (nicht gezeigt) auf. Im montierten Zustand stehen diese Halteelemente seitlich ab und dienen zur Befestigung der Dose z.B. an einer Armierung. Über den Umfang des Grundkörpers 2, bzw. über den Umfang der Seitenwand 3 sind die Kupplungsmittel 29 hier um je 90 Grad versetzt angeordnet zu den zweiten heraustrennbaren Wandbereichen 16. Auf diese Weise können mehrere Dosen 1 zugleich mittels der Haltemittel beispielsweise an einer Armierung befestigt werden und zugleich dazwischen mittels einer Durchgangöffnung 26 verbunden werden. Eine andere Anordnung der Kupplungsmittel 29 ist jedoch ebenfalls denkbar.

**Figur 4** zeigt eine Installationsdose 1 gemäss **Figur 3** (ohne Deckel) wirkverbunden mit einer teilweise geschnitten dargestellten Installationsdose 1 gemäss einer dritten Ausführungsform der Erfindung. Die beiden gezeigten Dosen 1, 1 sind hierbei in ihren Merkmalen im Wesentlichen identisch, unterscheiden sich jedoch in ihrer Höhe und individuellen Ausgestaltung. In der Darstellung ist ersichtlich, wie die jeweiligen zweiten herausgetrennten Wandbereiche (nicht dargestellt) eine gemeinsame Durchgangsöffnung 26 von einem Installationsraum 4 in den anderen ausbildet. Die zumindest teilweise um die Durchgangsöffnung 26 angeordneten Dichtungen 20 liegen in dem verbundenen Zustand der beiden Installationsdosen 1,1 aufeinander auf und bewirken so, dass die Durchgangöffnung 26 vor dem Eindringen durch Beton geschützt ist. In dem gezeigten Fall ist eine der beiden Installationsdosen 1, 1 in der ersten Richtung (z) weniger lang ausgestaltet. Die hat zur Folge, dass die beiden Dosen 1, 1 nicht an den jeweiligen Deckeln 9 miteinander wirkverbunden werden können. Stattdessen ist der Deckel 9 der kürzeren Dose 1 mit der röhrenförmigen Seitenwand 3 der längeren Dose 1 wirkverbunden. Die Wirkverbindungsmittel 17 sind hierbei umfangsseitig jeweils neben der Durchgangsöffnung 26 angeordnet, was die Dichtwirkung an der Durchgangsöffnung 26 verstärkt. Am Sockel 11 sind weitere Wirkverbindungsmittel 17 vorgesehen (wirkverbundene Elemente hier verdeckt).

**Figur 5** stellt zwei wirkverbundene Installationsdosen gemäss **Figur 1** und **Figur 2** in einer perspektivischen Ansicht dar. Beide Dosen 1,1 sind in einem geöffneten Zustand gezeigt, bei dem der Sockel 11 sowie der Deckel 9 von der röhrenförmigen Seitenwand 3 losgelöst sind. Bei der vorderen Dose ist hierbei ein erster Wandbereich 7 aus der röhrenförmigen Seitenwand 3 herausgetrennt um ein Rohr 30 einzuführen. Der herausgetrennte Wandbereich 7 gibt die Omega-förmige Einführöffnung 8 frei mit den von der ersten Kontur gebildeten Hinterschnitt 18. Das Rohr 30 liegt in dem gezeigten Fall bereits an dem Ausschnitt 28 des Deckels 9 an und die Dichtlippe 21 greift zwischen die Lamellen des einzuführenden Rohres 30 ein. Ein Detailausschnitt zeigt eine Wirkverbindung der beiden Dosen 1,1 über die je am Deckel 9 angeordneten Wirkverbindungsmittel 17. Weitere Wirkverbindungsmittel 17 können am Grundkörper 2, bzw. am Sockel 11 angeordnet sein.

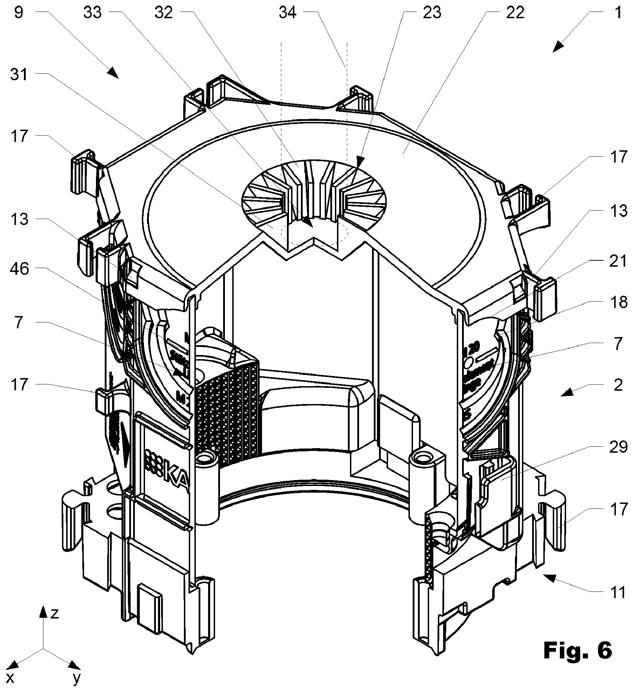

**Figur 6** zeigt eine weitere Ausführungsform einer erfindungsgemässen Installationsdose 1 in einer perspektivischen, teilweise geschnittenen Ansicht. Die Installationsdose 1 unterscheidet sich von den zuvor gezeigten Ausführungsformen durch die Ausgestaltung der Vertiefung 23 des Deckels 9 zur Aufnahme des Abstandshalters 34 (schematisch gezeigt). Die Vertiefung 23 ist konusförmig ausgestaltet und an der vom Installationsraum 4 wegweisenden Aussenseite 22 des Deckels 9 angeordnet. An den abgeschrägten Seitenflächen 32 des Konus stehen multiple Lamellen 31 ab. Die Lamellen 31 bilden an ihren radial innenliegenden Enden einen dazwischenliegenden Aufnahmeraum 33 für den oben beschriebenen Abstandshalter 34. Die Lamellen 31 sind vorzugsweise flexibel ausgestaltet, sodass der Abstandshalter 34 im eingebauten Zustand einklemmt wird und dieser bzw. die Installationsdose besser fixiert wird. Die Ausgestaltung der Vertiefung 23 kann ebenfalls bei allen anderen Ausführungsformen der erfindungsgemässen Installationsdose 1 verwendet werden. Für das einfache Ablängen des Abstandshalters 34 auf eine korrekte Länge, welche eine ausreichende Vorspannung auf die Installationsdose 1 aufbaut, weist die Installationsdose 1 eine Abstandsmarkierung 46 auf. Die Abstandsmarkierung 46 markiert einen Abstand gemessen in die erste Richtung von einem äusseren Ende des Deckels 9 (von der Installationsöffnung 10 weggewandtes, äusseres Ende der Dose 1). Wie ersichtlich, ist der durch die Abstandsmarkierung 46 markierte Abstand ist grösser als die Tiefe der Vertiefung 23. Die Abstandsmarkierung 46 ist in dem gezeigten Fall auf dem heraustrennbaren Wandbereich 7 angeordnet, kann jedoch ebenfalls an einem anderen Ort auf dem Grundkörper 2 angeordnet sein. Sämtliche Ausführungsformen können eine solche Abstandsmarkierung 46 aufweisen.

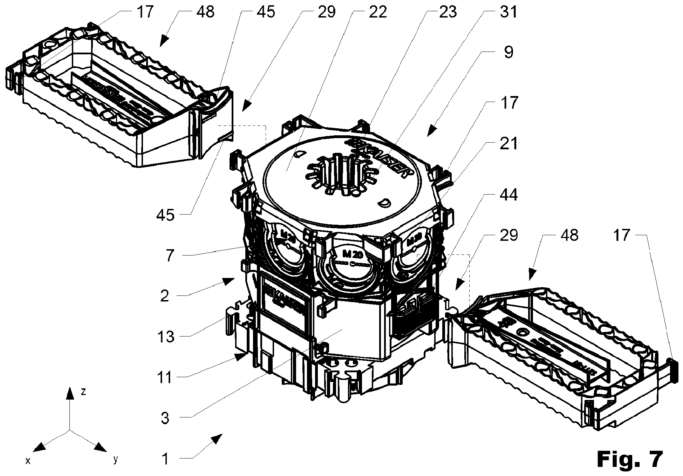

**Figur 7** zeigt eine weitere Ausführungsform einer Installationsdose gemäss der Erfindung mit zwei Halteelementen 48. Die Halteelemente 48 sind über Kupplungsmittel 29 an dem Grundkörper 2, insbesondere an der Seitenwand 3 angebracht. Für eine stabile Anbringung der Halteelemente 48 kann das Kupplungsmittel 29 pro Halteelement je zwei Rastelemente 45 umfassen. Die gezeigten Rastelemente 45 sind derart gestaltet, dass diese sowohl in der ersten als auch in der zweiten Anbringposition verrasten. Bei einer Drehung des Halteelementes 48 von der ersten Anbringposition in die zweite Anbringposition befinden sich in diesem Fall die Rastelemente 45 an der gleichen Position (in Hinblick auf das Kupplungsmittel 29 angeordnet am Grundkörper 2) und eine Verrastung in beiden Anbringpositionen ist möglich. Weiterhin umfasst das Kupplungsmittel 29 an der Seitenwand 3 eine erste rillenartige Struktur 44, welche gegen eine zweite rillenartige Struktur 44 des Kupplungsmittels 29 angeordnet an dem Halteelement 48 aufliegt. Die Rillen sind um 90° (grad) versetzt angeordnet, was eine erhöhte Reibung und zusätzliche Verklemmung des Halteelements 28 an dem Grundelement 2 erzeugt. Eine solche Ausgestaltung des Kupplungselementes 29 kann auch bei den anderen Ausführungsformen der erfindungsgemässen Installationsdose 1 vorgesehen werden.

Wie in **Figur 6** beschrieben, weist auch diese Dose gemäss **Figur 7** eine konusförmige Vertiefung 23 auf, welche an der vom Installationsraum wegweisenden Aussenseite 22 des Deckels 9 angeordnet ist. An den abgeschrägten Seitenflächen 32 des Konus stehen multiple Lamellen 31 ab. Die Lamellen 31 bilden an ihren radial innenliegenden Enden einen dazwischenliegenden Aufnahmeraum 33 für den oben beschriebenen Abstandshalter 34. Die Lamellen 31 sind in der gezeigten Ausführungsform dicker ausgestaltet, als in der **Figur 6****.** Die grundsätzliche Funktionsweise bleibt jedoch die gleiche. Eine solche Ausgestaltung der Vertiefung 23 kann auch bei anderen Ausführungsformen der erfindungsgemässen Installationsdose 1 vorgesehen werden.

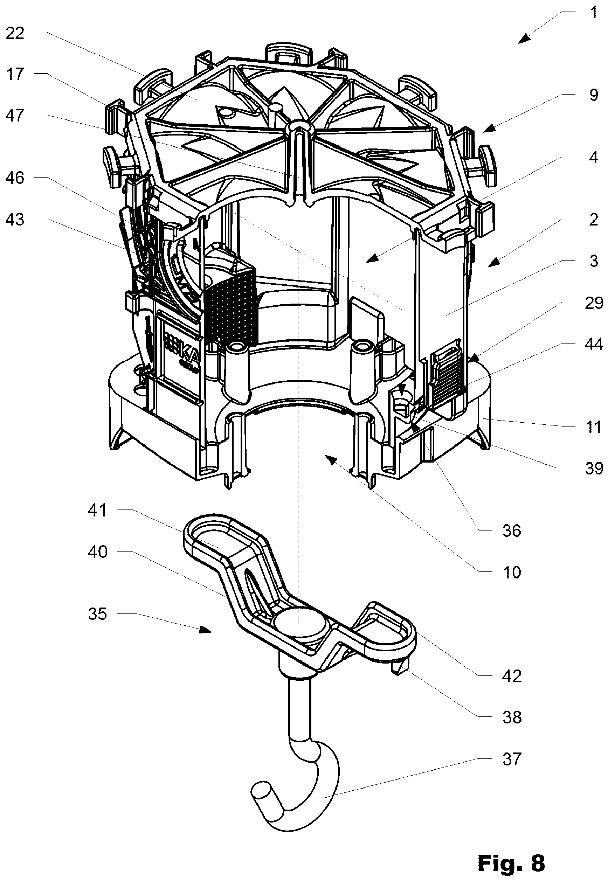

**Figur 8** zeigt eine weitere Ausführungsform einer Installationsdose 1 gemäss der Erfindung. Die Installationsdose 1 weist, wie oben beschrieben, einen Grundkörper 2 mit einer im Wesentlichen röhrenförmigen Seitenwand 3, sowie einen in der gezeigten Ausführungsvariante abnehmbaren Sockel 11 auf. Der Grundkörper 2 umfasst weiter eine rückseitige Montageöffnung 5 und eine dieser gegenüberliegende, vorderseitig (hier im Sockel 11) angeordnete Installationsöffnung 10. Der grundsätzliche Aufbau der Dose wie beispielsweise die heraustrennbaren Wandbereiche 7, 16 und die Fixierung und Dichtung des einzuführenden Rohrs in Kombination mit dem Deckel 9 sind im Wesentlichen identisch zu den zuvor beschriebenen Ausführungsformen. Die gezeigte Installationsdose weist zudem eine (erste) Montageaufnahme 36 zur Aufnahme einer (ersten) Montagehalterung 35 auf. Durch die Installationsöffnung 10 kann die Montagehalterung 35 in die Montageaufnahme 36 im Installationsraum 4 der Installationsdose 1 eingehängt werden, wie durch die gestrichelten Linien schematisch angezeigt. Hierfür umfasst die Installationsdose 1 im gezeigten Fall zwei Absätze an der Seitenwand 3 mit je einer (senkrecht zur ersten Richtung ausgerichteten) Auflagefläche. In den Auflageflächen sind Ausnehmungen 39 vorhanden, welche sich in die erste Richtung erstrecken. Diese Ausnehmungen 39 dienen zur Befestigung der Montagehalterung 35. Die Montagehalterung 35 umfasst einen U-förmig ausgestalten Steg 40 mit je dazu winklig abstehenden ersten und zweiten Enden 41, 42. An dem ersten und dem zweiten Ende 41, 42 sind Vorsprünge 38 angeordnet. Zwischen dem ersten und dem zweiten Ende 41,42 ist zudem ein Montagemittel 37, hier in der Form eines Hakens, angebracht. In der montierten Position der Montagehalterung 35 greifen die Vorsprünge 38 in die Ausnehmungen 29 ein und das erste und das zweite Ende 41, 42 des Steges 40 liegt je auf einer Auflagefläche auf.

Die gezeigte Ausführungsform weist zudem einen anderen Deckel 9 auf, welcher die rückseitige Montageöffnung 5 verschliesst. Der gezeigte Deckel 9 unterscheidet sich zu den bisher umschriebenen Deckeln dadurch, dass dieser eine zweite Montageaufnahme 47 auffasst. Die zweite Montageaufnahme 47 erstreckt sich vom Installationsraum 4 in die erste Richtung der Installationsdose 1 und dient zur Aufnahme eines einschraubbaren Montagemittels 37, wie beispielsweise eines Hakens, einer Öse oder ähnliches.

Je nach Anwendung können ebenfalls sämtliche Installationsdosen 1 der zuvor dargestellten Ausführungsformen eine (erste) Montageaufnahme 36 aufweisen. Weiterhin kann je nach Anwendung alternativ ebenfalls ein Deckel 9 mit einer (zweiten) Montageaufnahme 47 verwendet werden.

**LISTE DER BEZUGSZEICHEN**

| | | | |
|---|---|---|---|
| 1 | Installationsdose | 23 | Vertiefung |
| 2 | Grundkörper | 24 | Erste Zone |
| 3 | Seitenwand | 25 | Zweite Zone |
| 4 | Installationsraum | 26 | Durchgangsöffnung |
| 5 | Montageöffnung | 27 | Anzeigemittel |
| 6 | Erste Kontur | 28 | Ausschnitt |
| 7 | Erster Wandbereich | 29 | Kupplungsmittel |
| 8 | Einführöffnung | 30 | Rohr |
| 9 | Deckel | 31 | Lamellen |
| 10 | Installationsöffnung | 32 | Seitenflächen (Konus) |
| 11 | Sockel | 33 | Aufnahmeraum |
| 12 | Boden | 34 | Abstandshalter |
| 13 | Befestigungsmittel | 35 | Montagehalterung |
| 14 | Stufe | 36 | Erste Montageaufnahme |
| 15 | Zweite Kontur | 37 | Montagemittel |
| 16 | Zweiter Wandbereich | 38 | Vorsprung |
| 17 | Wirkverbindungsmittel | 39 | Ausnehmung |
| 18 | Hinterschnitt | 40 | Steg |
| 19 | Versteifungselement | 41 | Erstes Ende |
| 20 | Dichtung | 42 | Zweites Ende |
| 21 | Dichtlippe | 43 | Fixierungskragen |
| 22 | Deckelaussenseite | 44 | Rillenförmige Struktur |
| 45 | Rastelement | 48 | Halteelement |
| 46 | Abstandsmarkierung | | |
| 47 | Zweite Montageaufnahme | | |

## Patentansprüche

1. Installationsdose (1) für elektrotechnische Installationen umfassend
a. einen Grundkörper (2), mit einer sich in einer ersten Richtung erstreckenden röhrenförmigen Seitenwand (3), welche einen Installationsraum (4) umschliesst,
b. eine von der röhrenförmigen Seitenwand (3) berandete, rückseitige Montageöffnung (5), und einen Deckel (9) zum Verschliessen der Montageöffnung (5), wobei
c. die röhrenförmige Seitenwand (3) mindestens einen ersten rückseitig angeordneten, entlang mindestens einer ersten definierten Kontur (6) heraustrennbaren Wandbereich (7) aufweist,
d. wobei der heraustrennbare Wandbereich (7) bereichsweise an die Montageöffnung (5) anschliesst und in einem herausgetrennten Zustand eine entlang der ersten Kontur (6) verlaufende, an die Montageöffnung (5) anschliessende Einführöffnung (8) zum Einführen eines Elektrorohres in der ersten Richtung in den Installationsraum (4) bildet, **dadurch gekennzeichnet, dass**
e. die Einführöffnung (8) in eine erste Zone (24) zur Aufnahme des Elektrorohres und eine zweite Zone (25) zum seitlichen Einschieben des Elektrorohres aus der ersten Richtung in die erste Zone (24) aufteilbar ist, wobei eine Kontur der ersten Zone (24) rund ist, so dass diese dem äusseren Umfang des einzuführenden Rohres folgen kann, und
f. der Deckel (9) eine Dichtlippe (21) zum Abdichten des Rohres gegen den Deckel (9) aufweist, wodurch ein durch die Einführöffnung (8) eingeführtes Rohr dicht an der Installationsdose (1) anbringbar ist, sodass beim einem Giessen einer Betonwand kein Beton in die Dose eindringt.

2. Installationsdose (1) gemäss Patentanspruch 1, **dadurch gekennzeichnet, dass** der Deckel (9) über ein Scharnierband am Grundkörper (2) befestigt ist.

3. Installationsdose (1) gemäss einem der vorangehenden Patentansprüche, **dadurch gekennzeichnet, dass** der Grundkörper (2) eine vorderseitige Installationsöffnung (10) aufweist, welche der rückseitigen Montageöffnung (5) gegenüberliegt.

4. Installationsdose (1) gemäss Patentanspruch 3, **dadurch gekennzeichnet, dass** die Installationsöffnung (10) durch einen heraustrennbaren Boden (12) verschlossen ist.

5. Installationsdose (1) gemäss Patentanspruch 4, **dadurch gekennzeichnet, dass** der Boden (12) an einer dem Installationsraum (4) weggewandten Aussenseite ein Anzeigemittel (27) aufweist zum Anzeigen der Position der Installationsöffnung (10) in einer verputzten Wand.

6. Installationsdose (1) gemäss einem der Patentansprüche 3 bis 5, **dadurch gekennzeichnet, dass** die Installationsöffnung (10) an einem Sockel (11) angeformt ist.

7. Installationsdose (1) gemäss Patentanspruch 6, **dadurch gekennzeichnet, dass** der Sockel (11) über mindestens ein Befestigungsmittel (13) mit der röhrenförmigen Seitenwand (3) wirkverbindbar ist oder integral mit der röhrenförmigen Seitenwand (3) verbunden ist.

8. Installationsdose (1) gemäss einem der vorangehenden Patentansprüche, **dadurch gekennzeichnet, dass** der Grundkörper (2) mindestens einen vorderseitig angeordneten und entlang mindestens einer zweiten Kontur (15) heraustrennbaren zweiten Wandbereich (16) aufweist, welcher an die Installationsöffnung anschliesst.

9. Installationsdose (1) gemäss Patentanspruch 8, **dadurch gekennzeichnet, dass** die erste Kontur (6) des rückseitig angeordneten ersten heraustrennbaren Wandbereiches (7) an die zweite Kontur (15) des heraustrennbarenzweiten Wandbereiches (16) angrenzt.

10. Installationsdose (1) gemäss einem der vorangehenden Patentansprüche **dadurch gekennzeichnet, dass** die Einführöffnung (8) nach dem Heraustrennen des ersten Wandbereichs (7) in die erste Richtung mindestens einen Hinterschnitt (18) aufweist, sodass ein dort eingeschobenes Rohr hinter dem Hinterschnitt (18) verrastet.

11. Installationsdose (1) gemäss einem der vorangehenden Patentansprüche, **dadurch gekennzeichnet, dass** der erste und/oder zweite heraustrennbare Wandbereich (7, 16) zumindest bereichsweise von mindestens einem Versteifungselement (19) und/oder einer Dichtung umgeben ist.

12. Installationsdose (1) gemäss einem der vorangehenden Patentansprüche, **dadurch gekennzeichnet, dass** der Deckel (9) zur Aufnahme eines Abstandshalters an einer vom Installationsraum (4) wegweisenden Aussenseite (22) des Deckels eine konusförmige Vertiefung (23) mit Lamellen (31) aufweist.

13. Installationsdose (1) gemäss einem der vorangehenden Patentansprüche, **dadurch gekennzeichnet, dass** die Installationsdose (1) eine Montagehalterung (35) zur Aufnahme von Leuchten umfasst.

## Claims

1. Installation box (1) for electrical installations, comprising
a. a main body (2) having a tubular side wall (3) which extends in a first direction and encloses an installation space (4),
b. a rear mounting opening (5) bordered by the tubular side wall (3), and a cover (9) for closing the mounting opening (5), wherein
c. the tubular side wall (3) has at least one first wall region (7) which is arranged on the rear side and can be detached along at least one first defined contour (6),
d. wherein the detachable wall region (7) adjoins the mounting opening (5) in some regions and, when detached, forms an insertion opening (8) running along the first contour (6) and adjoining the mounting opening (5) for the insertion of an electrical tube into the installation space (4) in the first direction,
**characterized in that**
e. the insertion opening (8) can be divided into a first zone (24) for receiving the electrical tube and a second zone (25) for the lateral insertion of the electrical tube into the first zone (24) from the first direction, wherein a contour of the first zone (24) is round, so that it can follow the outer circumference of the tube to be inserted, and
f. the cover (9) has a sealing lip (21) for sealing off the tube with respect to the cover (9), by which means a tube inserted through the insertion opening (8) can be attached tightly to the installation box (1) so that, during the pouring of a concrete wall, no concrete penetrates the box.

2. Installation box (1) according to Patent Claim 1, **characterized in that** the cover (9) is fixed to the main body (2) via a hinge band.

3. Installation box (1) according to one of the preceding patent claims, **characterized in that** the main body (2) has an installation opening (10) on the front side, which is opposite the mounting opening (5) on the rear side.

4. Installation box (1) according to Patent Claim 3, **characterized in that** the installation opening (10) is closed by a detachable base (12).

5. Installation box (1) according to Patent Claim 4, **characterized in that,** on an outer side facing away from the installation space (4), the base (12) has an indicating means (27) for indicating the position of the installation opening (10) in a plastered wall.

6. Installation box (1) according to one of Patent Claims 3 to 5, **characterized in that** the installation opening (10) is integrally formed on a base (11).

7. Installation box (1) according to Patent Claim 6, **characterized in that** the base (11) can be operatively connected to the tubular side wall (3) via at least one fixing means (13) or is integrally connected to the tubular side wall (3) .

8. Installation box (1) according to one of the preceding patent claims, **characterized in that** the main body (2) has at least one second wall region (16) which is arranged on the front side and can be detached along at least one second contour (15), and which adjoins the installation opening.

9. Installation box (1) according to Patent Claim 8, **characterized in that** the first contour (6) of the first detachable wall region (7) arranged on the rear side adjoins the second contour (15) of the detachable second wall region (16) .

10. Installation box (1) according to one of the preceding patent claims, **characterized in that,** following the detachment of the first wall region (7) in the first direction, the insertion opening (8) has at least one undercut (18), so that a tube inserted therein latches behind the undercut (18).

11. Installation box (1) according to one of the preceding patent claims, **characterized in that** the first and/or second detachable wall region (7, 16) is surrounded, at least in some regions, by at least one stiffening element (19) and/or a seal.

12. Installation box (1) according to one of the preceding patent claims, **characterized in that** the cover (9) has a conical recess (23) with slats (31) for receiving a spacer on an outer side (22) of the cover pointing away from the installation space (4).

13. Installation box (1) according to one of the preceding patent claims, **characterized in that** the installation box (1) comprises a mounting bracket (35) for holding lights.

## Revendications

1. Boîte d'installation (1) pour installations électrotechniques, comprenant
a. un corps de base (2), avec une paroi latérale tubulaire (3) s'étendant dans une première direction, qui entoure un espace d'installation (4),
b. une ouverture de montage côté arrière (5) bordée par la paroi latérale tubulaire (3), et un couvercle (9) pour fermer l'ouverture de montage (5),
c. la paroi latérale tubulaire (3) présentant au moins une première région de paroi (7) agencée côté arrière, séparable le long d'au moins un premier contour défini (6),
d. la région de paroi séparable (7) se raccordant par régions à l'ouverture de montage (5) et formant, dans un état séparé, une ouverture d'introduction (8) s'étendant le long du premier contour (6), se raccordant à l'ouverture de montage (5), pour introduire un tube électrique dans la première direction dans l'espace d'installation (4),
**caractérisée en ce que**
e. l'ouverture d'introduction (8) peut être divisée en une première zone (24) pour recevoir le tube électrique et une deuxième zone (25) pour insérer latéralement le tube électrique dans la première zone (24) à partir de la première direction, un contour de la première zone (24) étant rond, de telle sorte que celui-ci peut suivre la circonférence extérieure du tube à introduire, et
f. le couvercle (9) présente une lèvre d'étanchéité (21) pour étanchéifier le tube contre le couvercle (9), un tube introduit par l'ouverture d'introduction (8) pouvant ainsi être monté de manière étanche sur la boîte d'installation (1), de telle sorte que du béton ne pénètre pas dans la boîte lors d'un coulage d'une paroi en béton.

2. Boîte d'installation (1) selon la revendication 1, **caractérisée en ce que** le couvercle (9) est fixé au corps de base (2) par l'intermédiaire d'une charnière plate.

3. Boîte d'installation (1) selon l'une quelconque des revendications précédentes, **caractérisée en ce que** le corps de base (2) présente une ouverture d'installation côté avant (10), qui est opposée à l'ouverture de montage côté arrière (5) .

4. Boîte d'installation (1) selon la revendication 3, **caractérisée en ce que** l'ouverture d'installation (10) est fermée par un fond séparable (12).

5. Boîte d'installation (1) selon la revendication 4, **caractérisée en ce que** le fond (12) présente, sur un côté extérieur détourné de l'espace d'installation (4), un moyen d'indication (27) pour indiquer la position de l'ouverture d'installation (10) dans un mur crépi.

6. Boîte d'installation (1) selon l'une quelconque des revendications 3 à 5, **caractérisée en ce que** l'ouverture d'installation (10) est formée sur un socle (11).

7. Boîte d'installation (1) selon la revendication 6, **caractérisée en ce que** le socle (11) peut être relié fonctionnellement à la paroi latérale tubulaire (3) par l'intermédiaire d'au moins un moyen de fixation (13) ou est relié d'un seul tenant à la paroi latérale tubulaire (3).

8. Boîte d'installation (1) selon l'une quelconque des revendications précédentes, **caractérisée en ce que** le corps de base (2) présente au moins une deuxième région de paroi (16) agencée côté avant et séparable le long d'au moins un deuxième contour (15), qui est raccordée à l'ouverture d'installation.

9. Boîte d'installation (1) selon la revendication 8, **caractérisée en ce que** le premier contour (6) de la première région de paroi séparable (7) agencée côté arrière est adjacent au deuxième contour (15) de la deuxième région de paroi séparable (16).

10. Boîte d'installation (1) selon l'une quelconque des revendications précédentes, **caractérisée en ce que** l'ouverture d'introduction (8) présente au moins une contre-dépouille (18) dans la première direction après la séparation de la première région de paroi (7), de telle sorte qu'un tube qui y est inséré s'enclenche derrière la contre-dépouille (18).

11. Boîte d'installation (1) selon l'une quelconque des revendications précédentes, **caractérisée en ce que** la première et/ou la deuxième région de paroi séparable (7, 16) sont entourées au moins par régions par au moins un élément de renforcement (19) et/ou un joint d'étanchéité.

12. Boîte d'installation (1) selon l'une quelconque des revendications précédentes, **caractérisée en ce que** le couvercle (9) présente un renfoncement conique (23) avec des lamelles (31) sur un côté extérieur (22) du couvercle détourné de l'espace d'installation (4) pour recevoir un espaceur.

13. Boîte d'installation (1) selon l'une quelconque des revendications précédentes, **caractérisée en ce que** la boîte d'installation (1) comprend un support de montage (35) pour recevoir des lampes.
